# FASCICULE DE BREVET EUROPEEN

(11) **EP 3 588 202 B1**
(45) Date de publication et mention de la délivrance du brevet: **16.04.2025**
(21) Numéro de dépôt: 18179672.3
(22) Date de dépôt: 25.06.2018
(51) Int. Cl.: G04B 19/32

(54) **COMPOSANT HORLOGER VERSATILE**
VIELSEITIGE UHRENKOMPONENTE
VERSATILE TIMEPIECE COMPONENT

(43) Date de publication de la demande: 01.01.2020
(73) Titulaire: ROLEX SA, 1211 Genève 26 (CH)
(72) Inventeur: DI LUNA, Pierre, 1211 Genève 26 (CH); PUJOL, Ollivier, 1006 Lausanne (CH); ROULET, Alexandra, 1211 Genève 26 (CH)
(74) Mandataire: Moinas & Savoye SARL

(56) Documents cités:
- CH-A2- 713 156
- JP-A- H0 755 958
- US-A- 4 205 522
- US-A1- 2003 007 425
- US-A1- 2004 196 742

## Description

### Introduction

La présente invention concerne un composant horloger versatile. Ce composant horloger peut être un cadran, un compteur de cadran, un index, un disque de lunette, plus généralement une plaque décorative. L'invention porte aussi sur une pièce d'horlogerie, comme une montre, comprenant un tel composant horloger versatile.

### Etat de l'Art

Il existe des composants horlogers dont l'esthétique varie en fonction de la luminosité pour former des effets décoratifs, notamment des cadrans. De tels composants horlogers comprennent traditionnellement des couches de vernis luminescentes. Ces composants horlogers existants présentent tous des inconvénients parmi lesquels :
- une architecture complexe, ce qui induit un procédé de fabrication complexe, une manipulation délicate, une utilisation limitée et/ou un coût global élevé ; et/ou
- un rendu limité sur le plan esthétique.

L'invention a pour objectif général d'offrir une solution de composant horloger versatile qui ne comprend pas tout ou partie des inconvénients de l'état de la technique, qui forme une solution améliorée par rapport aux solutions existantes.

Plus particulièrement, un objet de l'invention est d'offrir une solution de composant horloger versatile simple et permettant d'atteindre un effet esthétique attractif.

### Brève description de l'invention

A cet effet, l'invention repose sur un composant horloger pour pièce d'horlogerie, caractérisé en ce qu'il comprend une première portion et une deuxième portion, la première portion comprenant au moins une partie en au moins un matériau opaque au moins partiellement superposée au-dessus de la deuxième portion, cette deuxième portion comprenant un matériau apte à émettre au moins une onde lumineuse d'émission en cas d'excitation par au moins une onde lumineuse d'excitation, et ladite au moins une partie de la première portion comprenant une structuration permettant de transmettre au moins partiellement vers l'extérieur du composant horloger une onde lumineuse d'émission émise par la deuxième portion, de sorte que le composant horloger présente au moins un premier aspect de jour et au moins un deuxième aspect différent de nuit dans lequel la première portion est rétroéclairée par une onde lumineuse d'émission émise par la deuxième portion.

Un tel composant horloger peut être un cadran, un compteur de cadran, un index, un disque de lunette ou une plaque décorative.

L'invention porte aussi sur une pièce d'horlogerie, notamment montre-bracelet, en tant que telle, qui comprend un tel composant horloger.

L'invention est plus précisément définie par les revendications.

### Brève description des figures

Ces objets, caractéristiques et avantages de l'invention seront exposés en détail dans la description suivante de modes de réalisation particuliers faits à titre non-limitatif en relation avec les figures jointes parmi lesquelles :
La figure 1 représente une vue schématique en coupe d'un composant horloger versatile selon une première variante d'un premier mode de réalisation de l'invention.
La figure 2 représente une vue schématique en coupe d'un composant horloger versatile selon une autre première variante du premier mode de réalisation de l'invention.
Les figures 3 et 4 représentent une vue schématique en coupe d'un composant horloger versatile selon encore d'autres premières variantes du premier mode de réalisation de l'invention.
La figure 5 représente une vue schématique en coupe d'un composant horloger versatile selon une deuxième variante du premier mode de réalisation de l'invention.
La figure 6 représente une vue schématique en coupe d'un composant horloger versatile selon une première variante particulière d'un deuxième mode de réalisation de l'invention.
La figure 7 représente une vue agrandie de détails de la figure 6.
Les figures 8a et 8b représentent les aspects respectivement de jour et de nuit d'un composant horloger versatile selon une première variante particulière du deuxième mode de réalisation de l'invention.
Les figures 9 à 11 représentent une vue schématique en coupe d'un composant horloger versatile selon encore d'autres premières variantes du deuxième mode de réalisation de l'invention.
La figure 12 représente une vue schématique en coupe d'un composant horloger versatile selon une deuxième variante particulière du deuxième mode de réalisation de l'invention.

Pour la fluidité de la description, nous utiliserons les mêmes références pour les différents modes de réalisation pour désigner des caractéristiques identiques ou équivalentes.

De plus, pour simplifier la description suivante, nous désignerons par l'adjectif « extérieur » un volume ou surface d'un composant horloger destiné à une orientation vers l'extérieur d'une pièce d'horlogerie, notamment incluant un volume ou une surface directement visible par un observateur de la pièce d'horlogerie. Au contraire, l'adjectif « intérieur » désigne un volume ou surface d'un composant horloger destiné à une orientation vers l'intérieur d'une pièce d'horlogerie par rapport à un autre volume ou surface du même composant horloger orienté vers l'extérieur.

D'autre part, nous utiliserons l'adjectif « opaque » pour désigner la propriété d'un matériau dès lors que le matériau considéré entraîne une transmission de moins de 10% d'un rayonnement lumineux qui comprendra en pratique au moins des longueurs d'ondes du visible et/ou des ultraviolets. Par « matériau opaque », nous considérons un matériau dont la nature, combinée à l'épaisseur utilisée, forme une barrière opaque au rayonnement lumineux précité. Dans les modes de réalisation de l'invention, le matériau d'une première portion sera opaque en référence aux longueurs d'onde lumineuses permettant l'excitation d'un autre matériau d'une deuxième portion et/ou aux longueurs d'onde d'une onde lumineuse émise par un tel autre matériau excité, comme cela sera détaillé par la suite. En remarque, un même matériau peut être opaque lorsqu'il est utilisé selon une certaine épaisseur, et non opaque pour une épaisseur réduite. Nous utiliserons de même le terme au pluriel de « matériaux opaques » pour une structure comprenant l'agencement de plusieurs matériaux dont l'assemblage remplit les conditions explicitées ci-dessus pour la définition d'un « matériau opaque ». Nous utiliserons le terme de « zone opaque » ou « partie opaque » pour désigner une partie localisée d'un composant formée d'au moins un matériau opaque et qui se comporte comme cela est mentionné ci-dessus vis-à-vis d'un rayonnement, et empêche finalement tout effet visible d'une onde lumineuse au travers ladite zone ou partie opaque.

Nous utiliserons l'adjectif « transparent » pour désigner un matériau ou une partie d'un composant qui n'est pas opaque, couvrant ainsi les réalisations totalement transparentes et partiellement transparentes, comme semi-transparentes ou translucides. Nous utiliserons l'adjectif « transparent » pour désigner la propriété d'un matériau dès lors que le matériau considéré entraîne une transmission de plus de 10% inclus d'un rayonnement lumineux qui comprendra en pratique au moins des longueurs d'ondes du visible et/ou des ultraviolets. Par « matériau transparent », nous considérons un matériau dont la nature, combinée à l'épaisseur utilisée, permet la transmission au moins partielle du rayonnement lumineux précité. Dans les modes de réalisation de l'invention, le matériau de tout ou partie d'une première portion sera transparent en référence aux longueurs d'onde lumineuses permettant l'excitation d'un autre matériau d'une deuxième portion et/ou aux longueurs d'onde d'une onde lumineuse émise par un tel autre matériau excité, comme cela sera détaillé par la suite. En remarque, un même matériau peut être transparent lorsqu'il est utilisé selon une certaine épaisseur, et non transparent pour une épaisseur plus importante. Nous utiliserons de même le terme au pluriel de « matériaux transparents » pour une structure comprenant l'agencement de plusieurs matériaux dont l'assemblage remplit les conditions explicitées ci-dessus pour la définition d'un « matériau transparent ». Nous utiliserons le terme de « zone transparente » ou « partie transparente » pour désigner une partie localisée d'un composant formée d'au moins un matériau transparent et qui se comporte comme cela est mentionné ci-dessus vis-à-vis d'un rayonnement, et permet finalement tout effet visible d'une onde lumineuse au-travers ladite zone ou partie transparente. Une telle partie transparente peut être obtenue par l'utilisation d'au moins un matériau transparent, ou par l'utilisation d'au moins un matériau transparent avantageusement combiné à une structuration particulière, comme cela sera décrit par la suite.

Les modes de réalisation de l'invention sont tous basés sur l'utilisation d'une portion au sein d'un composant horloger apte à émettre une lumière lorsqu'elle est ou a été soumise à un éclairage, notamment un éclairage extérieur ou toute source appropriée d'excitation, dans une certaine plage de longueurs d'ondes, car la portion est composée d'un matériau notamment phosphorescent et/ou fluorescent. Nous appellerons ainsi « onde lumineuse d'excitation » un éclairage dans une plage de longueurs d'ondes permettant l'excitation de cette portion apte à émettre en retour une lumière ou un éclairage : en pratique, cette plage de longueurs d'ondes est tout ou partie des longueurs d'ondes correspondant aux ultraviolets et au visible. Enfin, nous appellerons « onde lumineuse d'émission » tout éclairage ou spectre d'émission produisant un effet visuel pour un observateur du composant horloger considéré, notamment la nuit ou sous conditions de luminosité réduite, émis par ladite portion suite à sa réception d'une onde lumineuse d'excitation. En remarque, nous mentionnerons par la suite de manière simplifiée les deux situations opposées jour/nuit, le terme de « nuit » ne se limitant pas à une situation d'obscurité totale mais s'entendant comme comprenant des périodes intermédiaires entre le jour et la nuit, d'obscurité partielle.

En remarque, une onde lumineuse d'excitation peut provenir de l'extérieur, et atteindre la deuxième portion après avoir traversé la première portion. En variante, une onde lumineuse d'excitation peut être générée par tout autre moyen, notamment par une source lumineuse interne. A titre d'exemple, elle pourrait être générée par une source lumineuse comprenant des LEDs disposée dans une pièce d'horlogerie, sous la deuxième portion.

Nous allons maintenant décrire plusieurs modes de réalisation de l'invention, dans le cadre d'un composant horloger destiné à une pièce d'horlogerie.

Un tel composant horloger 1 peut, par exemple, être un cadran pour une pièce d'horlogerie, notamment pour une montre-bracelet. Il comprend une première portion 10 formée en au moins un matériau opaque, ainsi qu'une deuxième portion 20 formée en au moins un matériau apte à émettre une onde lumineuse d'émission, notamment par phosphorescence et/ou fluorescence, lorsqu'elle est ou a été soumise à une onde lumineuse d'excitation dans une certaine plage de fréquences.

La première portion 10 comprend au moins une structuration 13 apte à rendre ladite première portion au moins partiellement transparente, de sorte à ce que la deuxième portion 20 puisse être soumise à un éclairage, notamment un éclairage extérieur, et de sorte à ce que la lumière émise par la deuxième portion 20 puisse générer un effet visuel pour un observateur du composant horloger. Autrement dit, la première portion comprend au moins un matériau opaque, qui la rendrait opaque sans la structuration.

Une « structuration » peut être toute ouverture formée en surface ou dans l'épaisseur de la première portion. Ainsi, nous pourrons utiliser le terme d'ouverture 13 pour désigner une structuration 13. Une telle ouverture peut être borgne ou débouchante ou traversante ou représenter une porosité interne dans l'épaisseur de la première portion. Une telle ouverture peut être une micro-ouverture ou une nano-ouverture, de préférence de taille suffisamment petite pour être invisible ou sensiblement invisible à l'œil nu de jour. Alternativement, une telle ouverture peut présenter une dimension plus importante, macroscopique, pour la rendre volontairement visible. Elle participe alors aussi au décor de jour. Alternativement, une telle ouverture borgne peut être réalisée sur la face non visible, pour la rendre volontairement invisible. Elle ne participe alors pas au décor de jour. Dans tous les cas, les ouvertures, traversantes ou non, peuvent présenter toute section, non nécessairement circulaire. Cette section peut en effet être rectangulaire ou en étoile, par exemple, ou présenter toute autre géométrie appropriée.

Alternativement, une structuration peut être une modification au moins locale des propriétés de transparence du matériau constituant la première portion dans tout ou partie de l'épaisseur de ladite première portion.

Une telle structuration peut être notamment obtenue par toute technique d'usinage conventionnelle, ou par usinage laser, notamment par usinage laser femto-seconde, ou par gravure ionique réactive profonde (Deep Reactive Ion Etching, DRIE) ou encore par attaque chimique.

Nous allons maintenant décrire un premier mode de réalisation de l'invention, dans le cadre d'un composant horloger destiné à une pièce d'horlogerie.

Selon le premier mode de réalisation, la première portion 10 se présente sous la forme d'une portion massive. Elle comprend une surface extérieure 11, destinée à être orientée vers l'extérieur d'une montre-bracelet et visible ou partiellement visible par l'observateur. Elle comprend de plus une surface intérieure 12 opposée et parallèle ou sensiblement parallèle, invisible par l'observateur. Elle peut présenter une épaisseur inférieure ou égale à 2 mm inclus, voire une épaisseur comprise entre 0.05 mm et 2 mm inclus. Une portion est notamment considérée massive lorsque, considérée indépendamment des autres portions, elle constitue un objet solide qui n'a pas structurellement besoin de support mécanique pour son maintien sans déformation.

Elle peut être formée d'un ou plusieurs matériau(x) choisi(s) parmi la liste non exhaustive suivante : certaines nacres, en particulier noires, certaines matières fossiles, écaille, mangano-calcite, lépidolite, bois silicifié, corail, ambre, perle, ivoire, en métal ou alliage métallique, comme le platine ou la ferrite ou la météorite, céramique technique à base de zircone et/ou d'alumine pigmentée ou non, gemme, minéral, roche ou substance précieuse d'origine organique, sphalérite, fluorite, agate, alexandrite, améthyste, anatase, aventurine, calcédoine, chrysobéryl, chrysoprase, citrine, jaspe, œil-de-tigre, opale, quartz, spinelle, aragonite, azurite, malachite, crocoïte, apatite, lazulite, turquoise, aigue-marine, béryl, tourmaline, obsidienne, ou obsidienne flocon de neige.

Selon une première variante du premier mode de réalisation, la deuxième portion 20 se présente sous la forme d'une portion massive. Une telle deuxième portion comprend ainsi avantageusement une structure massive intégrant une matière luminescente répartie dans son volume. Une telle deuxième portion peut présenter une épaisseur sensiblement constante, en moyenne comprise entre 0.01 mm et 5 mm. Une telle deuxième portion peut présenter une superficie supérieure ou égale à 1 mm² ou une superficie comprise entre 0.01 cm² et 15 cm² inclus. Une telle deuxième portion peut être une plaque formée en céramique fluorescente et/ou phosphorescente, notamment une céramique composite à base de zircone yttriée et d'aluminate de strontium dopée Dy/Eu, avantageusement en « zircone luminescente », par exemple telle que décrite dans le document EP2730636.

L'avantage d'une telle deuxième portion est qu'elle possède une rigidité suffisante pour lui offrir une propriété mécanique lui permettant d'être utilisée comme un support mécanique de la construction. Ainsi, la deuxième portion peut former un support mécanique pour la première portion et/ou un support permettant le montage du composant horloger au sein d'une pièce d'horlogerie. Finalement, la deuxième portion peut remplir la double fonction d'éclairage de nuit, à savoir qu'elle peut produire une onde lumineuse d'émission, et de support de la première portion du composant horloger. Par cette propriété mécanique, il est possible de former un composant horloger ne comprenant que les deux portions assemblées. Le composant horloger est ainsi simplifié au maximum.

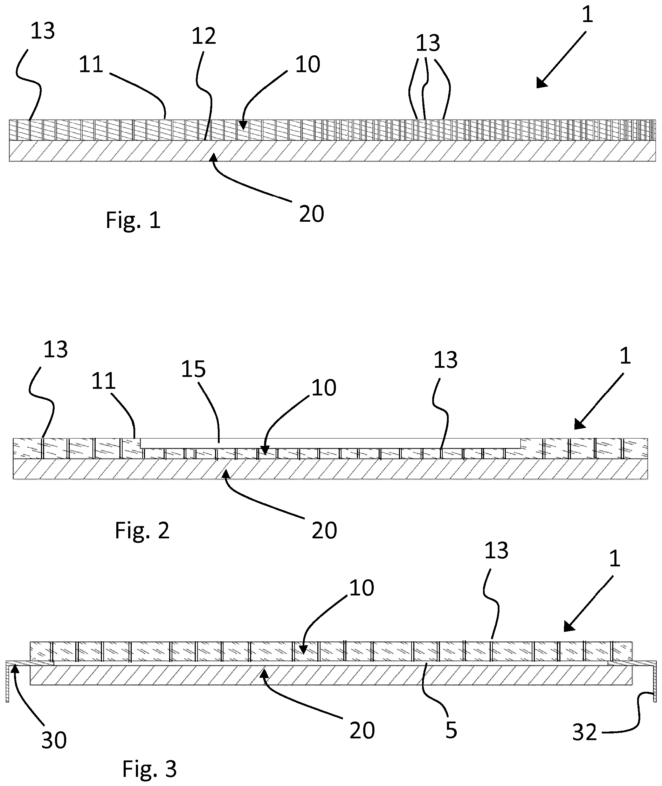

Ainsi, selon la première variante du premier mode de réalisation, les deux portions 10 et 20 du composant horloger se présentent comme deux éléments massifs ou solides distincts assemblés l'un à l'autre. La figure 1 illustre, par exemple, une exécution particulière d'un tel composant horloger muni uniquement de deux portions massives ou solides assemblées l'une à l'autre, par exemple par collage.

Plus particulièrement, ce composant horloger est muni d'une première portion 10 comprenant une structuration 13 prenant la forme de plusieurs ouvertures traversantes. La fonction de ces ouvertures traversantes est de rendre la première portion au moins partiellement transparente. Pour cela, la première portion peut comprendre une quantité suffisante d'ouvertures pour obtenir un effet visible de rétroéclairage fourni par la matière luminescente présente dans la deuxième portion : ces ouvertures traversantes sont donc suffisantes pour d'une part permettre la transmission d'ondes lumineuses d'excitation à la deuxième portion provenant de l'extérieur, et d'autre part pour la transmission d'ondes lumineuses émises par la deuxième portion suite à son excitation. Plus précisément, la première portion devient ainsi au moins partiellement transparente aux longueurs d'ondes qui permettent l'excitation et l'émission de la matière luminescente présente dans la deuxième portion, ce qui signifie qu'au moins certaines des longueurs d'ondes de la gamme permettant l'excitation de la matière luminescente spécifiquement utilisée passent au travers de la première portion avec une efficacité suffisante pour que la matière luminescente atteigne le niveau d'excitation requis et qu'au moins certaines des longueurs d'ondes de la gamme d'émission de cette même matière luminescente passent en retour au travers de la première portion avec une efficacité suffisante pour atteindre un niveau d'émission requis, notamment pour obtenir un effet visuel dans la nuit.

Les ouvertures 13 de la première portion sont ici des micro-ouvertures traversantes ou des nano-ouvertures traversantes, de préférence de taille suffisamment petite pour ne pas pouvoir être identifiées à l'œil nu. A titre d'exemple, ces ouvertures peuvent se présenter sous une forme sensiblement cylindrique de diamètre inférieur ou égal à 60 µm, puisqu'il est communément admis qu'à 20 cm, l'œil perçoit des détails supérieurs à une telle dimension. Autrement dit, pour que ces ouvertures traversantes ne se voient pas de jour, leurs dimensions sont préférentiellement inférieures au pouvoir séparateur maximal de l'œil en conditions normales d'observation d'une montre. Le pouvoir de résolution de l'œil est d'environ une minute d'arc. Finalement, par ces deux propriétés des micro-ouvertures du mode de réalisation, la première portion, bien que formée en un matériau opaque permet à la deuxième portion 20 d'être soumise à un éclairage, notamment un éclairage extérieur, et permet à la lumière émise par la deuxième portion 20 de générer un effet visuel pour un observateur du composant horloger.

Naturellement, la quantité d'ouvertures 13, leurs dimensions respectives et leur répartition, représentent un compromis choisi en fonction d'un résultat esthétique souhaité. En effet, la conformation, l'agencement et la densité de la structuration dépendent de l'effet recherché en termes de motif obtenu et/ou de niveau de persistance, selon la recherche d'un décor éphémère ou d'un affichage de plusieurs heures. Ce compromis dépend aussi de la matière luminescente choisie pour la deuxième portion. Il existe ainsi un nombre très important de possibilités. Toutefois, on note que des micro-ouvertures équivalentes à des cylindres traversants ou débouchants de diamètre inférieur ou égal à 100 microns, voire inférieur ou égal à 60 microns, et supérieur ou égal à une valeur de l'ordre de 250 nm ; la taille inférieure des ouvertures est celle permettant physiquement le passage des ondes d'excitation et/ou d'émission, permettant d'atteindre l'objectif recherché de manière satisfaisante. Bien entendu, les ouvertures peuvent présenter toute géométrie adaptée au passage des ondes d'excitation et/ou d'émission.

Bien entendu, il est possible d'obtenir des effets visuels équivalents, complémentaires ou alternatifs à partir d'au moins une ouverture borgne, dont la profondeur est suffisante pour permettre le passage des ondes lumineuses d'excitation et d'émission au travers de la matière résiduelle. Cette au moins une ouverture peut être formée à partir de la surface extérieure ou à partir de la surface intérieure de la première portion. Elle peut comporter des flancs droits ou inclinés. Optionnellement, cette ouverture peut comporter des moyens optiques, comme des fibres optiques ou être remplie de tout matériau au moins partiellement transparent.

Complémentairement ou alternativement, la première portion peut comprendre une structuration modifiant au moins localement les propriétés de transparence du matériau constituant ladite première portion. Autrement dit, différentes structurations peuvent être combinées pour créer les effets visuels souhaités. Par exemple, la figure 2 illustre une exécution particulière d'un composant selon une première variante du premier mode de réalisation, qui est muni d'une première portion comportant à la fois des ouvertures 13 traversantes et une ouverture borgne 15.

D'autre part, la structuration peut être homogène, en particulier toutes les ouvertures peuvent être identiques et uniformément réparties sur toute la surface de la première portion, pour former un effet homogène. Alternativement, leur répartition et/ou leur géométrie peut différer au sein de la première portion, pour former un effet hétérogène, ce qui procurera un effet visuel différent. Par exemple, le composant horloger peut comprendre des ouvertures borgnes de profondeur variable, qui peuvent évoluer selon un gradient. Cela permet d'observer une luminosité variable progressivement selon les zones du composant horloger.

Alternativement, la répartition des ouvertures n'est pas uniforme, comme dans l'exécution particulière représentée par la figure 1, mais ces ouvertures sont positionnées de sorte à former un dessin, qui sera perceptible de nuit, mis en évidence par le rétroéclairage par la deuxième portion luminescente. Dans ce cas, les ouvertures remplissent la double fonction de rendre la première portion au moins partiellement transparente tout en formant un dessin esthétique, soit une décoration visible de nuit. Selon une réalisation avantageuse, ce dessin peut, par exemple, être un motif, fournissant non seulement une décoration mais aussi une indication ou une information quelconque visible de nuit.

Dans cette construction particulière représentée par la figure 1, la première portion 10 définit l'esthétique de jour du composant horloger. Dans ce cas, l'observateur ne voit pas au travers de la première portion. De jour, il ne voit le composant horloger que comme s'il ne comprenait que cette première portion sans ouverture. Le composant horloger ainsi obtenu est donc un composant horloger versatile, puisqu'il présente au moins un premier aspect de jour dans lequel l'aspect du composant correspond sensiblement à l'aspect de la première portion, et au moins un deuxième aspect de nuit dans lequel la première portion est rétroéclairée par une onde lumineuse d'émission visible émise par la deuxième portion. Il existe ainsi un niveau d'obscurité, notamment d'obscurité partielle, à partir duquel la différence entre l'au moins premier aspect et l'au moins deuxième aspect devient visible. Par ailleurs, le rétroéclairage peut varier en fonction de l'intensité de l'onde lumineuse d'émission émise par la deuxième portion qui diminue avec le temps. Ainsi, l'aspect de nuit du composant peut être évolutif.

Dans le cas alternatif où tout ou partie des ouvertures sont visibles de jour, ces dernières participent à l'esthétique de jour du composant horloger. D'autre part, l'esthétique de nuit du composant horloger est celle de la première portion rétroéclairée par la lumière émise par la deuxième portion. Le composant horloger ainsi obtenu est donc un composant horloger versatile, puisqu'il présente au moins un premier aspect de jour et au moins un deuxième aspect de nuit, les au moins premier et deuxième aspects étant différents.

Dans la première variante du premier mode de réalisation, les deux portions du composant horloger se présentent donc comme deux éléments solides distincts assemblés l'un à l'autre. L'assemblage des deux portions du composant horloger peut, par exemple, être réalisé par un collage. Alternativement, l'assemblage des deux portions du composant horloger peut se faire par adhésion capillaire. Cet assemblage permet ainsi avantageusement une fixation plus ou moins amovible des deux portions entre elles. Alternativement encore, les deux portions peuvent être assemblées par rivetage, sertissage, ou chassage de moyens mécaniques connexes. Par exemple, les deux portions peuvent être mises en contact et maintenues ensemble par un cerclage mécanique.

Dans une exécution particulière d'un composant horloger selon la première variante du premier mode de réalisation, une troisième portion peut être prévue pour moduler, voire sublimer, les effets visuels générés par la deuxième portion dudit composant horloger, et donc moduler l'esthétique de jour et/ou de nuit du composant horloger. Cette troisième portion peut être intercalée entre la première et la deuxième portion. Cette troisième portion peut, par exemple, se présenter sous la forme d'un masque qui limite la transmission de lumière quelle que soit la structuration de la première portion située au-dessus. Cette troisième portion peut également se présenter sous la forme d'une couche, par exemple sous la forme d'une couche fluorescente, qui peut être excitée par la deuxième portion. Avantageusement, une telle troisième portion peut être prévue pour participer à la fonction d'assemblage des première et deuxième portions dudit composant horloger.

La figure 3 illustre une exécution d'un tel composant horloger. La troisième portion 30 est intercalée entre les deux premières portions, au niveau de leur circonférence, de manière à former une jupe comprenant une extension 32 vers l'intérieur destinée à la fixation du composant horloger. En partie centrale, les deux portions 10, 20 sont superposées mais non en contact, un espace 5 correspondant à l'épaisseur de la troisième portion 30 les séparant. Ainsi, avantageusement, cette troisième portion permet de moduler l'esthétique de jour et/ou de nuit du composant horloger en tenant à distance les première et deuxième portions.

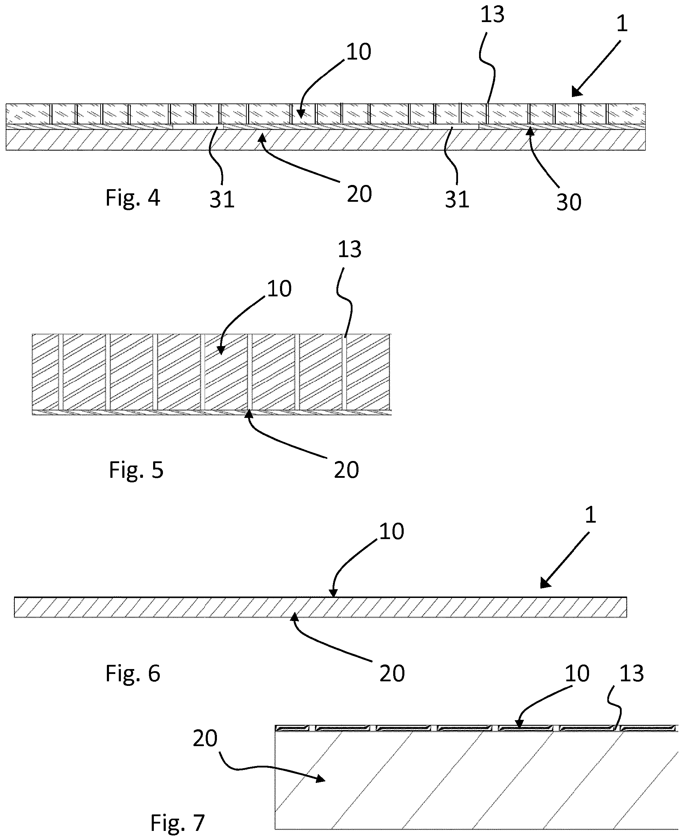

La figure 4 illustre une autre exécution d'un tel composant horloger dans lequel une troisième portion 30 se présente sous la forme d'un masque décoratif, intégré entre les deux portions 10, 20 du composant horloger. Ce masque peut être opaque et présenter des ouvertures 31 pouvant laisser passer les ondes lumineuses d'excitation et d'émission, ces ouvertures 31 formant éventuellement un dessin décoratif. Ainsi, avantageusement, cette troisième portion permet de moduler l'esthétique de jour et/ou de nuit du composant horloger. Avantageusement encore, cette troisième portion peut comporter des moyens optiques pour moduler le rétroéclairage de la deuxième portion, comme par exemple des fibres optiques. Alternativement, cette troisième portion peut se présenter sous la forme d'une couche, notamment semi-transparente, par exemple sous la forme d'une couche fluorescente semi-transparente, qui peut être excitée par la deuxième portion.

Dans une deuxième variante du premier mode de réalisation, la deuxième portion 20 ne se présente pas sous la forme d'une pièce massive, et/ou ne remplit pas la fonction de support mécanique décrite ci-dessus. Elle pourrait se présenter sous toute autre forme permettant de remplir sa fonction d'éclairage, à partir de tout matériau luminescent, phosphorescent et/ou fluorescent ou autre. Par exemple, elle peut se présenter sous la forme d'un vernis appliqué sous la première portion 10, i.e. sur la face intérieure 12 de la première portion 10. La figure 5 illustre, par exemple, une telle exécution d'un composant horloger.

Alternativement ou complémentairement, elle peut se présenter sous la forme d'un vernis appliqué dans des ouvertures formées dans la surface intérieure 12 de la première portion.

Ainsi, le composant horloger peut se présenter sous la forme d'un composant horloger monobloc, et non plus comme deux éléments distincts assemblés, de manière plus ou moins amovible.

En variante encore, la deuxième portion peut se présenter sous la forme d'un vernis appliqué sur un élément distinct de la première portion et positionné sous cette première portion. Cet élément distinct peut, par exemple, être une portion de support se présentant sous la forme d'un élément massif possédant avantageusement une rigidité suffisante pour lui offrir une propriété mécanique lui permettant d'être utilisée comme un support mécanique de la construction.

Ainsi, la portion de support peut former un support mécanique pour les première et deuxième portions et/ou un support permettant le montage du composant horloger au sein d'une pièce d'horlogerie.

Dans une exécution particulière d'un composant horloger selon la deuxième variante du premier mode de réalisation, une troisième portion peut être prévue pour moduler, voire sublimer, les effets générés par la deuxième portion dudit composant horloger, et donc moduler l'esthétique de jour et/ou de nuit du composant horloger. Cette troisième portion peut être intercalée entre la première et la deuxième portion. Cette troisième portion peut, par exemple, se présenter sous la forme d'un masque qui limite la transmission de lumière quelle que soit la structuration de la première portion située au-dessus. Cette troisième portion peut également se présenter sous la forme d'une couche notamment semi-transparente, par exemple sous la forme d'une couche fluorescente semi-transparente, qui peut être excitée par la deuxième portion. Avantageusement, une telle troisième portion peut être prévue pour assembler les première et deuxième portions dudit composant horloger.

Selon un deuxième mode de réalisation, la première portion 10 se présente sous la forme d'un revêtement appliqué sur la deuxième portion 20. L'épaisseur de ce revêtement est telle que le (ou les) matériau(x) qui le constitue est opaque. La structuration 13 consiste par exemple en des micro-ouvertures ou des nano-ouvertures réalisées dans ce revêtement, comme explicité précédemment. Le revêtement peut être composé de métaux, alliages métalliques, polymères, laques, vernis, émaux, céramiques, vitrocéramiques, ou matériaux hybrides. Le revêtement peut être déposé par tout moyen, comme un dépôt physique en phase vapeur (PVD), un dépôt chimique en phase vapeur (CVD), un dépôt par couche atomique (ALD), un sprayage (permettant de vaporiser un liquide en fines gouttelettes sous l'effet d'une surpression d'air), un procédé sol-gel, etc.

Tout autre mode opératoire connu par l'homme de métier pour déposer un revêtement pourra être envisagé.

Selon une première variante du deuxième mode de réalisation, la deuxième portion 20 se présente sous la forme d'une portion massive. Une telle deuxième portion comprend ainsi avantageusement une structure massive intégrant une matière luminescente répartie dans tout son volume. Une telle deuxième portion peut présenter une épaisseur sensiblement constante, en moyenne comprise entre 0.01 mm et 5 mm. Une telle deuxième portion peut être une plaque formée en céramique luminescente, avantageusement en zircone luminescente.

L'avantage d'une telle deuxième portion est qu'elle possède une rigidité suffisante pour lui offrir une propriété mécanique lui permettant d'être utilisée comme un support mécanique de la construction. Ainsi, la deuxième portion peut former un support mécanique pour la première portion et/ou un support permettant le montage du composant horloger au sein d'une pièce d'horlogerie. Finalement, la deuxième portion peut remplir la double fonction d'éclairage de nuit, à savoir qu'elle peut produire une onde lumineuse d'émission, et de support de la première portion du composant horloger. Par cette propriété mécanique, il est possible de former un composant horloger ne comprenant que les deux portions. Le composant horloger est ainsi simplifié au maximum.

Ainsi, selon la première variante du deuxième mode de réalisation, la première portion se présente sous la forme d'un revêtement appliqué sur la surface extérieure de la deuxième portion. Ainsi, le composant horloger selon la première variante du deuxième mode de réalisation se présente sous la forme d'un composant horloger monobloc, et non plus comme deux éléments distincts assemblés, de manière plus ou moins amovible.

La figure 6 représente une exécution particulière d'un composant horloger selon la première variante du deuxième mode de réalisation. Comme décrit précédemment, une structuration 13 à base de micro-ouvertures, représentées sur l'agrandissement de la figure 7, est réalisée dans ce revêtement.

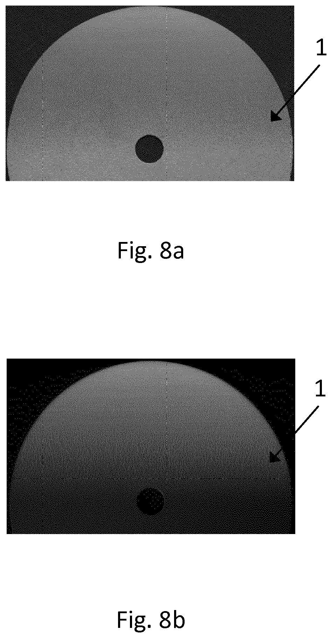

Les figures 8a et 8b représentent une exécution particulière d'un composant horloger selon la première variante du deuxième mode de réalisation, comprenant une première portion 10 formée par un dégradé de gris sur une couche opaque de 100 nm d'épaisseur de titane, formant un revêtement sur une deuxième portion 20 en zircone luminescente massive. La couche de titane est perforée, notamment à l'aide d'un laser femtoseconde, avec des taux de perforation progressivement augmentés, afin de créer un dégradé de gris, que l'observateur perçoit de jour. Plus particulièrement, la couche de titane comporte des micro-ouvertures dont la densité varie localement. La figure 8a représente le composant horloger de jour, qui présente un aspect gris métallique dégradé, et la figure 8b représente ce même composant horloger de nuit, qui présente un aspect lumineux d'intensité variable selon le dégradé susmentionné. Alternativement, la couche de titane peut être amincie à l'aide d'un laser femtoseconde, avec des taux d'ablation progressivement augmentés. Cela crée un dégradé de gris, que l'observateur peut percevoir ou non de jour, qui procure des effets esthétiques tels que ceux représentés en figures 8a et 8b. Par « ablation », nous entendons ici un amincissement au moins local du revêtement formant la première portion 10.

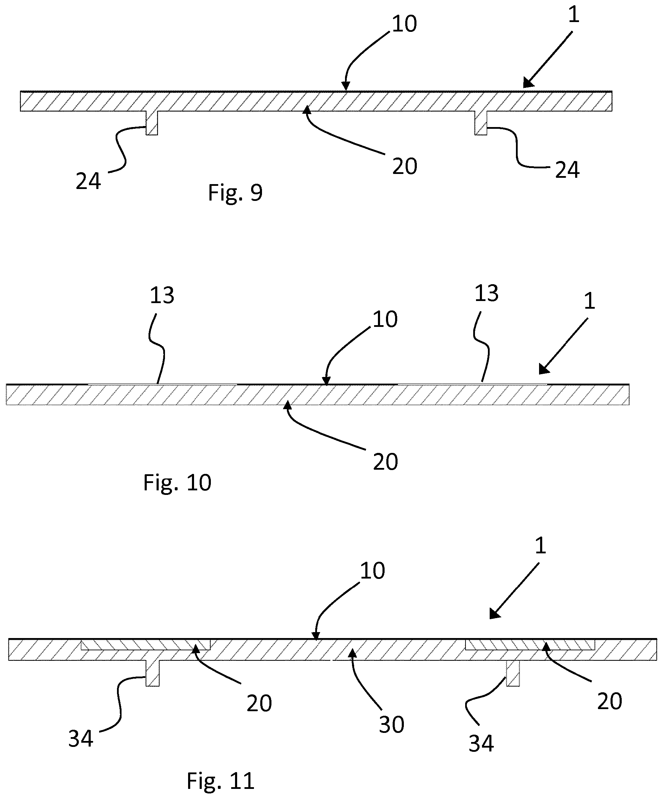

La figure 9 représente une autre exécution particulière d'un composant horloger selon la première variante du deuxième mode de réalisation, dans lequel la deuxième portion 20 présente des extensions 24 intérieures pour favoriser sa fixation.

La figure 10 représente une autre exécution particulière d'un composant horloger selon la première variante du deuxième mode de réalisation, dans lequel une première portion 10 se présente sous la forme d'un revêtement de platine opaque sur une deuxième portion 20 massive intégrant de la matière luminescente, telle que de la zircone luminescente. La première portion comprend des micro-ouvertures, non représentées, et des ouvertures 13 macroscopiques, formant une décoration visible de jour. Tout ou partie des ouvertures macroscopiques peut optionnellement être rempli par au moins un deuxième revêtement pouvant constituer un décor ou des inscriptions.

De telles ouvertures peuvent être réalisées par une déposition localisée, ou au moyen d'un masquage lors de la déposition du revêtement.

La figure 11 illustre une autre exécution particulière d'un composant horloger selon la première variante du deuxième mode de réalisation. Ce composant horloger intègre une troisième portion 30 se présentant sous la forme d'un composant massif servant de plaque de base du composant horloger, et intégrant, par exemple, des pieds 34 pour la fixation sur une pièce d'horlogerie comme un mouvement horloger. Une deuxième portion 20 comprend plusieurs parties distinctes massives intégrant de la matière luminescente répartie dans leur volume, telle que de la zircone luminescente, incluse dans des creusures dans la surface extérieure de la troisième portion 30. Les surfaces extérieures des deuxième et troisième portions sont sensiblement au même niveau et sont revêtues d'une première portion 10, telle qu'un revêtement. La deuxième portion 20 peut constituer des index rapportés. En alternative, ces index rapportés peuvent être en relief plutôt que dans le même plan que la troisième portion 30. De tels index peuvent par exemple être rapportés sur une plaque de cadran qui constitue la troisième portion 30. Ainsi, avantageusement, cette troisième portion peut faire office de support et/ou permettre de moduler l'esthétique de jour et/ou de nuit du composant horloger.

Quelle que soit l'exécution, une troisième portion peut être intercalée entre la première et la deuxième portion. Cette troisième portion peut, par exemple, se présenter sous la forme d'un masque qui limite la transmission de lumière quelle que soit la structuration de la première portion située au-dessus. Alternativement ou complémentairement, cette troisième portion peut également se présenter sous la forme d'une couche, notamment semi-transparente par exemple sous la forme d'une couche fluorescente semi-transparente, qui peut être excitée par la deuxième portion.

Dans une deuxième variante du deuxième mode de réalisation, la deuxième portion ne se présente pas sous la forme d'une pièce massive, et/ou ne remplit pas la fonction de support mécanique décrite ci-dessus. Elle pourrait se présenter sous toute autre forme permettant de remplir sa fonction d'éclairage, à partir de tout matériau luminescent, phosphorescent ou autre. Par exemple, elle peut se présenter sous la forme d'un vernis appliqué sur un élément distinct tel qu'une portion de support se présentant sous la forme d'un élément massif possédant avantageusement une rigidité suffisante pour lui offrir une propriété mécanique lui permettant d'être utilisée comme un support mécanique de la construction. Ainsi, la portion de support peut former un support mécanique pour la deuxième portion et/ou pour le composant horloger.

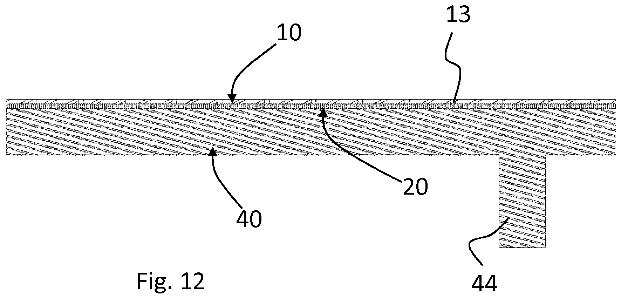

La figure 12 illustre une telle exécution dans laquelle une portion de support 40 est revêtue sur sa surface extérieure d'une deuxième portion 20, sur laquelle est revêtue une première portion 10. Cette portion de support 40 se présente sous la forme d'un composant massif servant de plaque de base du composant horloger, et intègre, par exemple, des pieds 44 pour la fixation sur une pièce d'horlogerie comme un mouvement horloger.

Ainsi, selon la deuxième variante du deuxième mode de réalisation, la première portion se présente sous la forme d'un revêtement appliqué sur la deuxième portion supportée par la portion de support. Ainsi, le composant horloger selon la deuxième variante du deuxième mode de réalisation se présente sous la forme d'une portion de support doublement revêtue par des première et deuxième portions au moins partiellement superposées.

Quel que soit le mode de réalisation considéré, le composant horloger peut être un cadran, un compteur de cadran, un index, un disque de lunette, ou plus généralement une plaque décorative. Dans ce dernier cas, la plaque décorative peut être assemblée à tout autre composant horloger pour le décorer : il peut ainsi venir en complément d'un cadran de structure sensiblement traditionnelle et non pas former seul le cadran, comme dans les exécutions particulières qui sont décrites. Ainsi, plus généralement, l'invention est applicable à tout objet dont l'habillage ou la décoration implémente la solution décrite. L'invention porte aussi sur une pièce d'horlogerie, notamment une montre-bracelet, intégrant un composant horloger versatile selon un mode de réalisation de l'invention.

Le composant horloger a été décrit précédemment de manière non limitative. De nombreuses autres exécutions sont envisageables.

Quel que soit le mode de réalisation considéré, d'autres éléments additionnels, tels que des index ou décalques, peuvent être superposés à la première portion, venant en masquer certaines zones. En fonction de la nature de ces éléments additionnels, l'effet de luminescence peut être conservé ou supprimé.

Il est bien entendu possible de combiner les variantes de réalisation ou les exécutions décrites précédemment. D'autre part, les deux portions 10, 20 du composant horloger peuvent n'être que partiellement superposées. Elles peuvent occuper toute géométrie, par exemple former l'intégralité d'un cadran ou seulement une sous-partie d'un cadran, comme des index ou des compteurs. De plus, la première portion peut comprendre une ou des zones en matériau opaque, comme décrit précédemment, combinées à une ou des zones en matériau(x) transparent(s), pour lesquelles une structuration n'est pas obligatoire, mais possible en vue de moduler optionnellement la propriété de transparence d'une telle zone. La première portion peut présenter une faible épaisseur, inférieure ou égale à 2 mm inclus, voire d'épaisseur comprise entre 5 nm et 2 mm inclus, voire entre 5 nm et 1 mm inclus, voire entre 5 nm et 0.8 mm inclus.

## Revendications

1. Composant horloger (1) pour pièce d'horlogerie, **caractérisé en ce qu'**il comprend une première portion (10) et une deuxième portion (20), la première portion (10) comprenant une partie en au moins un matériau opaque dont la nature, combinée à l'épaisseur utilisée, entraîne une transmission de moins de 10% d'un rayonnement lumineux, au moins partiellement superposée au-dessus de la deuxième portion (20), cette deuxième portion (20) se présentant sous la forme d'une portion massive, qui, indépendamment des autres portions, constitue un objet solide qui n'a pas structurellement besoin de support mécanique pour son maintien sans déformation, cette portion massive comprenant un matériau apte à émettre au moins une onde lumineuse d'émission en cas d'excitation par au moins une onde lumineuse d'excitation, et ladite partie de la première portion (10) comprenant une structuration (13) consistant en au moins une ouverture, invisible à l'œil nu de jour, formée sur une surface extérieure (11) et/ou sur une surface intérieure (12) et/ou en une ouverture formée dans l'épaisseur de ladite partie de la première portion (10) et/ou en une ablation de ladite partie de la première portion (10), permettant de transmettre au moins partiellement vers l'extérieur du composant horloger une onde lumineuse d'émission émise par la deuxième portion (20) et permettant de transmettre au moins partiellement à la deuxième portion une onde lumineuse d'excitation provenant depuis l'extérieur du composant horloger, de sorte que le composant horloger présente au moins un premier aspect de jour correspondant sensiblement à l'aspect de la première portion (10) et au moins un deuxième aspect différent de nuit dans lequel la première portion (10) est rétroéclairée par une onde lumineuse d'émission émise par la deuxième portion (20).

2. Composant horloger selon la revendication précédente, **caractérisé en ce que** ladite partie de la première portion (10) est formée dans au moins un matériau opaque à une onde lumineuse d'excitation de la deuxième portion et/ou à une onde lumineuse d'émission émise par la deuxième portion.

3. Composant horloger selon l'une des revendications précédentes, **caractérisé en ce que** ladite partie de la première portion (10) comprend une structuration (13) consistant en des ouvertures formées sur une surface extérieure (11) et/ou sur une surface intérieure (12) et/ou en des ouvertures formées dans l'épaisseur de ladite partie de la première portion (10) et/ou en une ablation de ladite partie de la première portion (10).

4. Composant horloger selon l'une des revendications précédentes, **caractérisé en ce que** ladite partie de la première portion (10) comprend une structuration (13) mettant en œuvre une modification au moins locale des propriétés de transparence du matériau constituant la première portion (10).

5. Composant horloger selon l'une des revendications précédentes, **caractérisé en ce que** ladite partie de la première portion (10) comprend une structuration (13) comprenant des ouvertures de dimension suffisamment petite comme des micro-ouvertures ou des nano-ouvertures, notamment par des micro-ouvertures équivalentes à des cylindres traversants ou débouchants de diamètre inférieur ou égal à 100 microns, voire inférieur ou égal à 60 microns, et supérieur ou égal à 250 nm.

6. Composant horloger selon l'une des revendications précédentes, **caractérisé en ce que** ladite partie de la première portion (10) comprend une structuration répartie de manière homogène ou une structuration répartie de manière hétérogène, pouvant former un motif, une information et/ou présentant un gradient.

7. Composant horloger selon l'une des revendications précédentes, **caractérisé en ce que** la première portion (10) comprend au moins une partie en matériau au moins partiellement transparent, homogène ou hétérogène, juxtaposée à au moins une partie comprenant au moins un matériau opaque comprenant une structuration.

8. Composant horloger selon l'une des revendications précédentes, **caractérisé en ce que** la deuxième portion (20) se présente en une structure formée en un matériau comprenant une propriété phosphorescente et/ou fluorescente.

9. Composant horloger selon la revendication précédente, **caractérisé en ce que** la deuxième portion (20) se présente en une céramique fluorescente et/ou phosphorescente, notamment en une céramique composite à base de zircone yttriée et d'aluminate de strontium dopée Dy/Eu, notamment en une zircone luminescente.

10. Composant horloger selon l'une des revendications précédentes, **caractérisé en ce que** la deuxième portion (20) forme un support de la première portion et/ou comprend un dispositif de fixation du composant horloger sur une pièce d'horlogerie.

11. Composant horloger selon l'une des revendications précédentes, **caractérisé en ce que** la première portion (10) se présente en une structure massive, ou sous la forme d'un revêtement de la deuxième portion (20).

12. Composant horloger selon l'une des revendications précédentes, **caractérisé en ce que** la première portion est en nacre, en particulier en nacre noire, en matière fossiles, en écaille, en mangano-calcite, en lépidolite, en bois silicifié, en corail, en ambre, en perle, en ivoire, en métal ou alliage métallique, comme le platine ou la ferrite ou la météorite, en céramique technique à base de zircone et/ou d'alumine pigmentée ou non, en gemme, en minéral, en roche ou substance précieuse d'origine organique, en sphalérite, en fluorite, en agate, en alexandrite, en améthyste, en anatase, en aventurine, en calcédoine, en chrysobéryl, en chrysoprase, en citrine, en jaspe, en œil-de-tigre, en opale, en quartz, en spinelle, en aragonite, en azurite, en malachite, en crocoïte, en apatite, en lazulite, en turquoise, en aigue-marine, en béryl, en tourmaline, en obsidienne, ou en obsidienne flocon de neige.

13. Composant horloger selon l'une des revendications 1 à 10, **caractérisé en ce qu'**il comprend un assemblage, amovible ou non, entre les première et deuxième portions (10 ; 20) par collage, ou par un dispositif mécanique comme un cerclage mécanique ou un sertissage, ou par adhésion capillaire ou **en ce que** la première portion (10) est un revêtement de surface de la deuxième portion (20), notamment un revêtement en métal, en alliage métallique, en polymère, ou est une laque, ou un émail, ou une céramique, ou une vitrocéramique, ou un matériau hybride, ou un vernis, ou **en ce que** la deuxième portion (20) est un vernis appliqué sous la première portion (10) au niveau de la surface intérieure (12) de la première portion ou dans une creusure de cette surface intérieure (12) ou sur une surface d'une autre portion, ou **en ce que** la deuxième portion (20) est un vernis appliqué sur une autre portion et **en ce que** la première portion (10) est un revêtement appliqué sur le vernis formant la deuxième portion (20).

14. Composant horloger selon l'une des revendications précédentes, **caractérisé en ce que** la première portion présente une épaisseur inférieure ou égale à 2 mm inclus, voire d'épaisseur moyenne comprise entre 5 nm et 2 mm inclus, voire entre 5 nm et 1 mm inclus, voire entre 5 nm et 0.8 mm inclus et/ou **en ce que** la deuxième portion (20) présente une épaisseur supérieure ou égale à 0.01 mm, voire en moyenne comprise entre 0.01 mm et 5 mm inclus et/ou **en ce que** la deuxième portion (20) présente une superficie supérieure ou égale à 1 mm², notamment une superficie comprise entre 0.01 cm² et 15 cm² inclus.

15. Composant horloger selon l'une des revendications précédentes, **caractérisé en ce qu'**il consiste en la première portion (10) et en la deuxième portion (20) ou **en ce qu'**il comprend une troisième portion (30) disposée par-dessus ou sensiblement au niveau de la deuxième portion (20) ou intercalée entre la première et la deuxième portion.

16. Composant horloger selon la revendication précédente, **caractérisé en ce que** la troisième portion (30) est un masque, sélectif ou non, et/ou **en ce que** la troisième portion (30) comprend un dispositif de fixation du composant horloger et/ou **en ce que** la troisième portion (30) supporte plusieurs parties distinctes de la deuxième portion (20) et/ou **en ce que** la troisième portion (30) participe à la fonction d'assemblage des première et deuxième portions et/ou **en ce que** la troisième portion (30) comprend des éléments optiques comme des fibres optiques.

17. Composant horloger selon l'une des revendications précédentes, **caractérisé en ce qu'**il est un cadran, un compteur de cadran, un index, un disque de lunette ou une plaque décorative.

18. Pièce d'horlogerie, notamment montre-bracelet, **caractérisée en ce qu'**elle comprend un composant horloger selon l'une des revendications précédentes.

## Patentansprüche

1. Uhrenkomponente (1) für ein Zeitmessgerät, **dadurch gekennzeichnet, dass** sie einen ersten Abschnitt (10) und einen zweiten Abschnitt (20) umfasst, wobei der erste Abschnitt (10) einen Teil aus mindestens einem opaken Material umfasst, dessen Art, kombiniert mit der verwendeten Dicke, zu einer Transmission von weniger als 10 % einer Lichtstrahlung führt, und mindestens teilweise dem zweiten Abschnitt (20) überlagert ist, wobei dieser zweite Abschnitt (20) in Form eines massiven Abschnitts ausgebildet ist, der unabhängig von den anderen Abschnitten einen festen Gegenstand bildet, der strukturell keine mechanische Unterstützung für seinen verformungsfreien Halt benötigt, wobei dieser massive Abschnitt ein Material umfasst, das geeignet ist, im Fall der Anregung durch mindestens eine Anregungslichtwelle mindestens eine Emissionslichtwelle zu emittieren, und wobei der Teil des ersten Abschnitts (10) eine Strukturierung (13) umfasst, die aus mindestens einer mit bloßem Auge bei Tag unsichtbaren Öffnung, die an einer Außenfläche (11) und/oder an einer Innenfläche (12) gebildet ist, und/oder aus einer Öffnung, die in der Dicke des Teils des ersten Abschnitts (10) ausgebildet ist, und/oder aus einer Abtragung des Teils des ersten Abschnitts (10) besteht und die es ermöglicht, mindestens teilweise nach außerhalb der Uhrenkomponente eine Emissionslichtwelle zu emittieren, die von dem zweiten Abschnitt (20) emittiert wird, und es ermöglicht, mindestens teilweise zu dem zweiten Abschnitt eine von außerhalb der Uhrenkomponente kommende Anregungslichtwelle zu transmittieren, so dass die Uhrenkomponente mindestens ein erstes Tagerscheinungsbild, das im Wesentlichen dem Erscheinungsbild des ersten Abschnitts (10) entspricht, und mindestens ein davon verschiedenes zweites Nachterscheinungsbild, bei dem der erste Abschnitt (10) durch eine von dem zweiten Abschnitt (20) emittierte Emissionslichtwelle hinterleuchtet wird, aufweist.

2. Uhrenkomponente nach dem vorhergehenden Anspruch, **dadurch gekennzeichnet, dass** der Teil des ersten Abschnitts (10) aus mindestens einem für eine Anregungslichtwelle des zweiten Abschnitts und/oder für eine von dem zweiten Abschnitt emittierte Emissionslichtwelle opaken Material gebildet wird.

3. Uhrenkomponente nach einem der vorhergehenden Ansprüche, **dadurch gekennzeichnet, dass** der Teil des ersten Abschnitts (10) eine Strukturierung (13) umfasst, die aus an einer Außenfläche (11) oder an einer Innenfläche (12) gebildeten Öffnungen und/oder aus in der Dicke des Teils des ersten Abschnitts (10) gebildeten Öffnungen und/oder aus einer Abtragung des Teils des ersten Abschnitts (10) besteht.

4. Uhrenkomponente nach einem der vorhergehenden Ansprüche, **dadurch gekennzeichnet, dass** der Teil des ersten Abschnitts (10) eine Strukturierung (13) umfasst, die eine mindestens lokale Änderung der Transparenzeigenschaften des Materials ausführt, aus dem der erste Abschnitt (10) besteht.

5. Uhrenkomponente nach einem der vorhergehenden Ansprüche, **dadurch gekennzeichnet, dass** der Teil des ersten Abschnitts (10) eine Strukturierung (13) umfasst, die Öffnungen von ausreichend geringer Größe wie Mikroöffnungen oder Nanoöffnungen umfasst, insbesondere durch Mikroöffnungen, die äquivalent zu durchgängigen oder einmündenden Zylindern mit einem Durchmesser kleiner oder gleich 100 Mikrometer, sogar kleiner oder gleich 60 Mikrometer, und größer oder gleich 250 nm sind.

6. Uhrenkomponente nach einem der vorhergehenden Ansprüche, **dadurch gekennzeichnet, dass** der Teil des ersten Abschnitts (10) eine homogen verteilte Strukturierung oder eine heterogen verteilte Strukturierung umfasst, die ein Muster, eine Information bilden kann und/oder einen Gradienten aufweist.

7. Uhrenkomponente nach einem der vorhergehenden Ansprüche, **dadurch gekennzeichnet, dass** der erste Abschnitt (10) mindestens einen Teil aus mindestens teilweise transparentem, homogenem oder heterogenem Material umfasst, der neben mindestens einem Teil angeordnet ist, der mindestens ein opakes Material umfasst, das eine Strukturierung umfasst.

8. Uhrenkomponente nach einem der vorhergehenden Ansprüche, **dadurch gekennzeichnet, dass** der zweite Abschnitt (20) aus einer Struktur ausgebildet ist, die aus einem Material gebildet wird, das eine phosphoreszierende und/oder fluoreszierende Eigenschaft umfasst.

9. Uhrenkomponente nach dem vorhergehenden Anspruch, **dadurch gekennzeichnet, dass** der zweite Abschnitt (20) aus einer fluoreszierenden und/oder phosphoreszierenden Keramik, insbesondere aus einer Verbundkeramik auf der Basis von Yttrium-stabilisiertem Zirkonoxid und Dy/Eu-dotiertem Strontiumaluminat, insbesondere aus einem lumineszierenden Zirkonoxid, ausgebildet ist.

10. Uhrenkomponente nach einem der vorhergehenden Ansprüche, **dadurch gekennzeichnet, dass** der zweite Abschnitt (20) einen Träger des ersten Abschnitts bildet und/oder eine Vorrichtung zur Befestigung der Uhrenkomponente an einem Zeitmessgerät umfasst.

11. Uhrenkomponente nach einem der vorhergehenden Ansprüche, **dadurch gekennzeichnet, dass** der erste Abschnitt (10) aus einer massiven Struktur oder in Form einer Beschichtung des zweiten Abschnitts (20) ausgebildet ist.

12. Uhrenkomponente nach einem der vorangehenden Ansprüche, **dadurch gekennzeichnet, dass** der erste Abschnitt aus Perlmutt, insbesondere aus schwarzem Perlmutt, aus fossilem Material, aus Schildplatt, aus Mangancalcit, aus Lepidolit, aus verkieseltem Holz, aus Koralle, aus Bernstein, aus Perle, aus Elfenbein, aus Metall oder Metalllegierung wie Platin oder Ferrit oder Meteorit, aus technischer Keramik auf der Basis von Zirkonoxid und/oder pigmentiertem oder unpigmentiertem Aluminiumoxid, aus Edelstein, aus Mineral, aus Gestein oder wertvoller Substanz organischen Ursprungs, aus Sphalerit, aus Fluorit, aus Achat, aus Alexandrit, aus Amethyst, aus Anatas, aus Aventurin, aus Chalcedon, aus Chrysoberyll, aus Chrysopras, aus Citrin, aus Jaspis, aus Tigerauge, aus Opal, aus Quarz, aus Spinell, aus Aragonit, aus Azurit, aus Malachit, aus Krokoit, aus Apatit, aus Lazulit, aus Türkis, aus Aquamarin, aus Beryll, aus Turmalin, aus Obsidian oder aus Schneeflockenobsidian ist.

13. Uhrenkomponente nach einem der Ansprüche 1 bis 10, **dadurch gekennzeichnet, dass** sie eine lösbare oder unlösbare Verbindung zwischen dem ersten und dem zweiten Abschnitt (10; 20) durch Kleben oder durch eine mechanische Vorrichtung wie eine mechanische Umreifung oder eine Einfassung oder durch kapillare Adhäsion umfasst, oder dadurch, dass der erste Abschnitt (10) eine Oberflächenbeschichtung des zweiten Abschnitts (20) ist, insbesondere eine Beschichtung aus Metall, aus Metalllegierung, aus Polymer, oder eine Glasur oder ein Email oder eine Keramik oder eine Glaskeramik oder ein Hybridmaterial oder ein Lack ist, oder dadurch, dass der zweite Abschnitt (20) ein Lack ist, der unter dem ersten Abschnitt (10) an der Innenfläche (12) des ersten Abschnitts oder in einer Vertiefung dieser Innenfläche (12) oder auf einer Fläche eines anderen Abschnitts appliziert ist, oder dadurch, dass der zweite Abschnitt (20) ein Lack ist, der auf einem anderen Abschnitt appliziert ist, und dadurch, dass der erste Abschnitt (10) eine Beschichtung ist, die auf dem den zweiten Abschnitt (20) bildenden Lack appliziert ist.

14. Uhrenkomponente nach einem der vorhergehenden Ansprüche, **dadurch gekennzeichnet, dass** der erste Abschnitt eine Dicke kleiner oder gleich 2 mm einschließlich, sogar eine mittlere Dicke zwischen 5 nm und 2 mm einschließlich, sogar zwischen 5 nm und 1 mm einschließlich, sogar zwischen 5 nm und 0,8 mm einschließlich aufweist, und/oder dadurch, dass der zweite Abschnitt (20) eine Dicke von größer oder gleich 0,01 mm, sogar im Mittel zwischen 0,01 mm und 5 mm einschließlich aufweist, und/oder dadurch, dass der zweite Abschnitt (20) eine Fläche größer oder gleich 1 mm², insbesondere eine Fläche zwischen 0,01 cm² und 15 cm² einschließlich, aufweist.

15. Uhrenkomponente nach einem der vorhergehenden Ansprüche, **dadurch gekennzeichnet, dass** sie aus dem ersten Abschnitt (10) und aus dem zweiten Abschnitt (20) besteht, oder dadurch, dass sie einen dritten Abschnitt (30) umfasst, der über oder im Wesentlichen an dem zweiten Abschnitt (20) angeordnet ist oder zwischen dem ersten und dem zweiten Abschnitt eingefügt ist.

16. Uhrenkomponente nach dem vorhergehenden Anspruch, **dadurch gekennzeichnet, dass** der dritte Abschnitt (30) eine selektive oder nicht selektive Maske ist, und/oder dadurch, dass der dritte Abschnitt (30) eine Vorrichtung zur Befestigung der Uhrenkomponente umfasst, und/oder dadurch, dass der dritte Abschnitt (30) mehrere unterschiedliche Teile des zweiten Abschnitts (20) trägt, und/oder dadurch, dass der dritte Abschnitt (30) zu der Funktion des Verbindens des ersten und des zweiten Abschnitts beiträgt, und/oder dadurch, dass der dritte Abschnitt (30) optische Elemente wie optische Fasern umfasst.

17. Uhrenkomponente nach einem der vorhergehenden Ansprüche, **dadurch gekennzeichnet, dass** sie ein Zifferblatt, ein Zifferblattzähler, ein Index, eine Lünettenscheibe oder eine dekorative Scheibe ist.

18. Zeitmessgerät, insbesondere Armbanduhr, **dadurch gekennzeichnet, dass** es eine Uhrenkomponente nach einem der vorhergehenden Ansprüche umfasst.

## Claims

1. A horology component (1) for a timepiece, **characterized in that** said component comprises a first portion (10) and a second portion (20), the first portion (10) comprising a part that is made from at least one opaque material, of which the nature, combined with the thickness used, has a transmission of under 10% of light radiation, at least partially superposed on top of the second portion (20), this second portion (20) being a massive portion which, when, considered independently of the other portions, constitutes a solid object which has no structural need for mechanical support in order to support it without deformation, this massive portion comprising a material capable of emitting at least one emission light wave if excited by at least one excitation light wave, and said part of the first portion (10) comprising a structuration (13), consisting in at least one opening, invisible to the naked eye by day, formed on an exterior surface (11) and/or on an interior surface (12) and/or in openings formed in the thickness of said part of the first portion (10) and/or in an ablation of said part of the first portion (10), allowing an emission light wave emitted by the second portion (20) to be transmitted at least partially toward the outside of the horology component and allowing an excitation light wave coming from outside the horology component to be transmitted at least in part to the second portion, so that the horology component exhibits at least a first appearance by day corresponding substantially to the appearance of the first portion (10) and at least one different second appearance by night where the first portion (10) is backlit by an emission light wave emitted by the second portion (20).

2. The horology component as claimed in the preceding claim, **characterized in that** said part of the first portion (10) is formed in at least one material that is opaque to an excitation light wave exciting the second portion and/or to an emission light wave emitted by the second portion.

3. The horology component as claimed in one of the preceding claims, **characterized in that** said part of the first portion (10) comprises a structuration (13) consisting in openings formed on an exterior surface (11) and/or on an interior surface (12) and/or in openings formed in the thickness of said part of the first portion (10) and/or in an ablation of said part of the first portion (10).

4. The horology component as claimed in one of the preceding claims, **characterized in that** said part of the first portion (10) comprises structuring (13) employing at least local modification to the transparency properties of the material of which the first portion (10) is made.

5. The horology component as claimed in one of the preceding claims, **characterized in that** said part of the first portion (10) comprises structuring (13) comprising openings of sufficiently small size such as micro-openings or nano-openings, notably micro-openings equivalent to open-ended cylinders or cylinders that pass all the way through with a diameter less than or equal to 100 microns, or even less than or equal to 60 microns, and greater than or equal to 250 nm.

6. The horology component as claimed in one of the preceding claims, **characterized in that** said part of the first portion (10) comprises structuring distributed homogeneously or structuring distributed heterogeneously, able to form a pattern, information and/or exhibiting a gradient.

7. The horology component as claimed in one of the preceding claims, **characterized in that** the first portion (10) comprises at least one part made of a homogeneous or heterogeneous at least partially transparent material, juxtaposed with at least one part comprising at least one opaque material comprising structuring.

8. The horology component as claimed in one of the preceding claims, **characterized in that** the second portion (20) is in the form of a structure formed from a material having a phosphorescent and/or fluorescent property.

9. The horology component as claimed in the preceding claim, **characterized in that** the second portion (20) is in the form of a fluorescent and/or phosphorescent ceramic, notably a composite ceramic based on yttrium-stabilized zirconia and Dy/Eu-doped strontium aluminate, notably a luminescent zirconia.

10. The horology component as claimed in one of the preceding claims, **characterized in that** the second portion (20) forms a support for the first portion and/or comprises a fixing device for fixing the horology component on a timepiece.

11. The horology component as claimed in one of the preceding claims, **characterized in that** the first portion (10) is in the form of a massive structure, or in the form of a coating of the second portion (20).

12. The horology component as claimed in one of the preceding claims, **characterized in that** the first portion is made of mother-of-pearl, particularly black mother-of-pearl; of fossil material; of tortoiseshell; of manganocalcite; of lepidolite; of petrified wood; of coral; of amber; of pearl; of ivory; of metal or of metal alloy such as platinum or ferrite or meteorite; of engineering ceramic based on zirconia and/or alumina, pigmented or otherwise; of gemstone; of mineral; of stone or precious substance of organic origin; of sphalerite; of fluorite; of agate; of alexandrite; of amethyst; of anatase; of aventurine quartz; of calcedony; of chrysoberyl; of chrysoprase; of citrine; of jasper; of tiger's eye; of opal; of quartz; of spinel; of aragonite; of azurite; of malachite; of crocoite; of apatite; of lazulite; of turquoise; of aquamarine; of beryl; of tourmaline; of obsidian; or of snowflake obsidian.

13. The horology component as claimed in one of claims 1 to 10, **characterized in that** said component comprises a removable or nonremovable assembly between the first and second portions (10; 20) by bonding, or using a mechanical device such as mechanical strapping or setting, or using capillary adhesion, or **in that** the first portion (10) is a surface coating of the second portion (20), notably a coating of metal, of metal alloy, of polymer, or is a lacquer or an enamel or a ceramic, or a vitreous ceramic, or a hybrid material, or a varnish, or **in that** the second portion (20) is a varnish applied under the first portion (10) on the interior surface (12) of the first portion or in a hollow of this interior surface (12) or on a surface of another portion, or **in that** the second portion (20) is a varnish applied on another portion and **in that** the first portion (10) is a coating applied to the varnish forming the second portion (20).

14. The horology component as claimed in one of the preceding claims, **characterized in that** the first portion has an average thickness less than or equal to 2 mm inclusive, or even an average thickness comprised between 5 nm and 2 mm inclusive, or even between 5 nm and 1 mm inclusive, or even between 5 nm and 0.8 mm inclusive and/or in that the second portion (20) has a thickness greater than or equal to 0.01 mm, or even on average comprised between 0.01 mm and 5 mm inclusive, and/or **in that** the second portion (20) has a surface area greater than or equal to 1 mm², notably a surface area comprised between 0.01 cm² and 15 cm² inclusive.

15. The horology component as claimed in one of the preceding claims, **characterized in that** said component consists of the first portion (10) and of the second portion (20) or **in that** said component comprises a third portion (30) arranged on top of or substantially even with the second portion (20) or interposed between the first and second portion.

16. The horology component as claimed in the preceding claim, **characterized in that** the third portion (30) is a mask, selective or otherwise, and/or **in that** the third portion (30) comprises a fixing device for fixing the horology component and/or **in that** the third portion (30) supports several distinct parts of the second portion (20) and/or **in that** the third portion (30) contributes to the function of assembling the first and second portions and/or **in that** the third portion (30) comprises optical elements such as optical fibres.

17. The horology component as claimed in one of the preceding claims, **characterized in that** said component is a dial, a dial counter, an hour marker, a numeral marker, a bezel disk, or a decorative plate.

18. A timepiece, in particular a wristwatch, **characterized in that** said timepiece comprises a horology component as claimed in one of the preceding claims.
